# EUROPÄISCHE PATENTSCHRIFT

(11) **EP 1 456 924 B1**
(45) Veröffentlichungstag und Bekanntmachung des Hinweises auf die Patenterteilung: **27.06.2007**
(21) Anmeldenummer: 02803321.5
(22) Anmeldetag: 26.09.2002
(51) Int. Cl.: H02G 3/04, H02G 9/06, H02G 3/32

(54) **MONTAGE- UND ABDECK-EINRICHTUNG FÜR KABEL SOWIE VERFAHREN FÜR DESSEN MONTAGE**
INSTALLATION AND COVER DEVICE FOR CABLES AND METHOD FOR INSTALLATION THEREOF
DISPOSITIF DE MONTAGE ET DE RECOUVREMENT DE CABLES ET PROCEDE DE MONTAGE DE CEUX-CI

(30) Priorität: 20.11.2001 AT 18282001
(43) Veröffentlichungstag der Anmeldung: 15.09.2004
(73) Patentinhaber: Wien Kanal-Abwassertechnologien GesmbH, 1030 Wien (AT)
(72) Erfinder: KADRNOSKA, Helmut, A-1220 Wien (AT); REISS, Gerhard, A-2361 Laxenburg (AT); FIETZ, Alfons, A-3051 St. Christophen (AT)
(74) Vertreter: Wildhack, Helmut
(86) Internationale Anmeldenummer: PCT/AT2002/000281
(87) Internationale Veröffentlichungsnummer: WO 2003/044919

(56) Entgegenhaltungen:
- EP-A- 0 855 773
- US-A- 4 647 251

## Beschreibung

Die vorliegende Erfindung betrifft eine neue Montage- und Abdeckeinrichtung für entlang von Wänden, Wandungen, Decken od.dgl., insbesondere von unterirdisch verlaufenden Rohren, Gewölben, Tunnels, Kanälen, Schächten od.dgl., vorzugsweise von (Abwasser-) Kanalsystemen, zu verlegende Kabel bzw. Kabelstränge für Telefonie, Datenströme, Stromtransport u.dgl., insbesondere Glasfaser- bzw. Lichtleiter-Kabel bzw. Kabelstränge, mit voneinander beabstandet an die genannten Wände bzw. Wandungen, Decken od.dgl. montierten Kabelhaltern und einer auf bzw. an denselben befestigbaren, die Kabel bzw. Kabelstränge im Wesentlichen umgreifenden Abdeckung.

Eine Vergleichbare Einrichtung is aus US-A-4 647 251 bekannt.

Die hohen Wachstumsraten auf dem Gebiet der Informationstechnologie und Telekommunikation, aber auch der immer noch steigende Energiebedarf hat in den letzten Jahren einen großzügigen Ausbau der Übertragungsleitungen und -kabel der verschiedensten Art und deren gegenseitige Vernetzung nötig gemacht

Selbst in Gebieten mit geringer Verbauung erfolgt die Verlegung der für die genannten Zwecke vorgesehenen Leitungen oder Kabel in hohem Maße nicht mehr über z.B. witterungsbedingt störanfällige Freileitungen in der Landschaft, sondern, wenn irgend möglich, unter der Bodenoberfläche, wobei die dafür nötigen Aufgrabungsarbeiten zwar relativ aufwändig sind, aber im Wesentlichen nicht durch andere Infrastruktureinrichtungen, Gebäude, Bodeneinbauten od.dgl. gestört werden.

Wesentlich schwieriger war und ist die Verlegung derartiger Leitungen unter der Oberfläche in städtischen Ballungsgebieten, wobei hiezu nur der Aspekt der Verkehrsbehinderung als wesentlicher Nachteil erwähnt sei.

Im Zuge des Aufbaus von Leitungssystemen und Datennetzen mit hohen Übertragungsdichten und -raten, stellen Lichtleiter- bzw. Glasfaserkabel einen wesentlichen Faktor dar, und es ist vor einigen Jahren begonnen worden, die für deren Verlegung notwendigen Aufgrabungs- und Bauarbeiten möglichst zu vermeiden und für die Verlegung derartiger Spezialkabel sich einer schon vorhandenen unterirdischen Infrastruktur von Versorgungs- und Entsorgungsnetzen, insbesondere z.B.Abwasser-Kanalnetzen, zu bedienen. Zwischenzeitlich werden in verschiedenen Großstädten nicht nur Datenübertragungs-, Steuerungs- und Informationsträger-Kabel, sondern auch beispielsweise Starkstromkabel in unterirdischen Kanalnetzen od.dgl. verlegt.

Der große Vorteil dieser relativ neuen Art der Verlegung besteht darin, dass ein Öffnen des Bodens mit einer Zerstörung von Verkehrsflächen, Pflasterungen und mit den wesentlichen Beeinträchtigungen des Verkehrs von Menschen und Fahrzeugen für das Legen eines Kabels bzw. Kabelstrangs mit allen unangenehmen Konsequenzen nicht mehr notwendig ist, was wesentliche Kosteneinsparungen trotz relativ hoher Flexibilität hinsichtlich der Verlegestrecke bringt.

Eine wesentliche Forderung bleibt dabei selbstverständlich weiter bestehen, nämlich jene, dass auch die Verlegetechnik in den unterirdischen Ver- und Entsorgungssystemen einen möglichst geringen Aufwand erfordert, und dass so ein rasches Verlegen unter den erschwerten, in Kanalnetzen herrschenden Bedingungen ermöglicht ist.

Die bisher übliche Technik der Verlegung von Kabeln und Kabelsträngen bestand im Wesentlichen darin, dass an den Wänden eines Bauwerks, wie z.B. eines Tunnels, eines Kanals od.dgl, in Abständen von etwa ein bis zwei Metern jeweils Kabelhalter mit etwa schalen- bzw. rinnenförmigen Aufnahmen für die Halterung oder Klemmung der zu verlegenden Kabel montiert werden und auf diese Kabelhalter die Kabel beidseitig seitlich und nach vorne hin abdeckende Kabelabdeckplatten, -hauben od.dgl. aus im Wesentlichen rigiden Materialien, z.B. aus Kunststoffen mit oder ohne Faserverstärkung, zu befestigen. Diese Kabelabdeckungen hatten aus Gründen der leichteren Verbringung an die jeweilige unterirdische Verlegestelle und auch wegen der einfacheren Handhabbarkeit relativ geringe Baulänge, so dass für die Verlegung längerer Kabelabdeckungen eine große Zahl derartiger Kabelabdeckplatten an den in relativ exakt einzuhaltenden, der Länge der Abdeckplatten entsprechenden Abständen an der jeweiligen Wand, Decke od.dgl. montierten Kabelhaltern zu befestigen war. Damit verbunden bleibt das Faktum, dass praktisch bei jedem Kabelhalter oder bei jedem zweiten davon eine Abdeckplatte stumpfstoßend jeweils an die nächstfolgende Abdeckplatte angrehzt, so dass eine große Anzahl von Stoßfugen mit der damit einhergehenden Verschmutzungsgefahr od.dgl. in Kauf zu nehmen ist.

Die vorliegende Erfindung hat sich die Aufgabe gestellt, eine neue Art eines Abdecksystems für an Wänden, Decken od.dg., insbesondere von unterirdischen Bauwerken, wie insbesondere Kanalsystemen verlegten Kabeln mit die Kabel bzw. Kabelstränge haltenden Kabelhaltern und einer auf die selben aufzubringenden, die verlegten Kabel bzw. Kabelstränge umhüllenden Abdeckung zu schaffen. Die neue Kabelabdeckung sollte sich dadurch auszeichnen, dass der Manipulationsaufwand zu deren Aufbringung gering ist, und gleichzeitig sollte die sie vorher angesprochene Problematik der großen Zahl von gegen Ablösen zu sichernden Stoßfugen und die Verschmutzungsgefahr dieser Stoßfugen zwischen den einzelnen aneinander grenzenden Abdeckplatten minimieren.

Gegenstand der vorliegenden Erfindung ist somit eine Montage- und Abdeck-Einrichtung der eingangs genannten Art, deren wesentliche Merkmale darin bestehen,
- dass die Abdeckung als auf mindestens einem Aufspulorgan, insbesondere Trommel, Spule, Rolle, Walze od.dgl. aufspulbares und für die Montage von demselben abspulbares bzw. abwickelbares Kabelabdeck-Profilband mit einem Front-Abdeckstreifen und von dessen beiden Seitenrändern ausgehenden Flanken-Abdeckstreifen ausgebildet ist,
- dass die beiden Seiten-Abdeckstreifen über eine Biege- oder Falt-Verbindung oder aber über eine Gelenk-Verbindung, bevorzugt über eine Scharnier-Verbindung, mit dem Front-Abdeckstreifen verbunden sind,
- dass die beiden Seiten-Abdeckstreifen des Kabelabdeck-Profilbands in dessen insbesondere für Lagerung und Transport aufgespultern Zustand mit ihren freien Seitenrändern aufeinander zu eingeklappt sind und sich in gleicher Richtung wie der Front-Abdeckstreifen bzw. im Wesentlichen parallel zu demselben erstrecken, und
- dass - für das Befestigen des die Kabel-Abdeckung bildenden Profilbandes auf den Kabelhaltern sowie für das umgreifende Abdecken der von denselben gehaltenen Kabel bzw. Kabelstränge-jeder der beiden Flanken-Abdeckstreifen durch Auffalten, Aufklappen bzw. Auf-Wegschwenken vom Front-Abdeckstreifen weg in eine Montage- und Abdeck-Stellung quer bzw. im Wesentlichen senkrecht zu dessen Erstreckung verbringbar ist.

Die Erfindung stellt zum ersten Mal eine Art von wesentlich weniger Aufwand bei Herstellung, Transport, Logistik und Manipulation erforderndem Endlos-Kabel-Montage- und -abdecksystem zur Verfügung.

Der Vorteil der Erfindung liegt insbesondere darin, dass ein im Wesentlichen zwar eine gewisse Materialstärke aufweisendes, jedoch grundsätzlich doch nur zweidimensionales Kabelabdeck-Profilband anstelle einer großen Zahl von etwa Eckig-Klammer-Querschnitt aufweisenden dreidimensionalen und daher bei Lagerung und Transport viel Raum beanspruchenden und an Ort und Stelle einzeln zu manipulierenden Abdebkplatten, -hauben od.dgl. tritt.

Es ist als Folge der Erfindung nun nur mehr notwendig, ein auf einer entsprechenden Aufspul-Trommel od.dgl. aufgespultes, kontinuierliches Kabelabdeck-Profilband an die Verlegestelle bzw. in deren Nahbereich, wie z.B. an eine Zugangsöffnung zu einem Kanalsystem zu verbringen, dort das neuartige Abdeckband von der Trommel abzuspulen und in den Kanal bis zur jeweiligen - sich z.B. der Zugangsöffnung im Zuge der Verlegearbeit immer mehr annähernden - Vertegestelle in das Kanalsystem hineinzuziehen, wo dann am besten kontinuierlich das Auffalten bzw. Aufschwenken der Flanken-Abdeckstreifen vom Front-Abdeckstreifen weg in die letztlich dreidimensionale, ebenfalls im Querschnitt etwa einer eckigen Klammer entsprechende End- bzw. Montageform erfolgt. Mit dieser so gebildeten "kontinuierlichen" Abdeckhaube erfolgt die vorgesehene umgreifende Umhüllung der verlegten Kabel unter Fixierung der kontinuierlichen Kabelabdeckung auf den im Abstand zueinander angeordneten Kabelhaltern.

Es soll an dieser Stelle betont werden, dass eine erfindungsgemäße bandartige kontinuierliche Kabelabdeckung, bei welcher Scharniere zwischen den Abdeckstreifen vorgesehen sind, wegen ihrer größeren Einsatzvielseifigkeit und Flexibilität im Rahmen der Erfindung besonders bevorzugt ist.

In diesem Sinn besteht eine weitere vorteilhafte Ausführungsform der neuen Montage- und Abdeckeinrichtung für Kabel bzw. Kabelstränge gemäß **Anspruch** 2 darin,
- dass die Kabel-Abdeckung bzw. das dieselbe bildende Profilband mit Gelenksverbindungen, insbesondere Scharnier-Verbindungen, zwischen dem Front-Abdeckstreifen und den beiden Flanken-Abdeckstreifen ausgebildet ist, wobei jeder der soeben genannten Abdeckstreifen für Lagerung und Transport auf einem eigenen Aufspulorgan gesondert aufgespult bzw. aufgewickelt ist, und
- dass die drei Abdeckstreifen im Wesentlichen erst bei oder knapp vor der Montage der Abdeckung zu dem Ensemble des sich in Montage- und Abdeckstellung MA befindlichen Kabelabdeck-Profilbandes aus Front-Abdeckstreifen und beidseitig mit demselben über die Scharnier-Verbindungen gelenkig verbundenen, jeweils quer zur Erstreckung des Front-Abdeckstreifens von demselben weggeklappten bzw. wegragenden Flanken-Abdeckstreifen zusammenfügbar bzw. vereinigbar sind.

Bei dieser Ausführungsart der Erfindung mit auf gesonderten Aufspulorganen aufgewickelten Einzel-Abdeckstreifen ist neben der Tatsache, dass im Vergleich zur Aufspulung eines montagefertigen Kabelabdeck-Profilbands, bei angenommener gleicher Größe des Aufspulorgans, wie vorher beschrieben, etwa die zwei- bis zweieinhalb-fache Länge der einzelnen Abdeckstreifen untergebracht werden kann, und dass das Vereinigen bzw. Zusammenfügen der vorher voneinander getrennten Abdeckstreifen zum fertigen Kabelabdeck-Profilband im Rahmen der Fertigung wegfällt und an den Ort der Montage der Abdeckung verlegt wird, was die Flexibilität des Einsatzes erhöht.

Was die Eigenschaften des für das neue Kabelabdeck-Profilband günstigerweise zu verwendenden Materials betrifft, so gibt darüber der **Anspruch** 3 näher Auskunft, wobei zu betonen ist, dass - selbstverständlich Langzeit-Stabilität, -Feuchtebeständigkeit, -Beständigkeit gegen Organismenbefall und -Biegsamkeit ohne Bruchgefahr auch bei tiefen Temperaturen vorausgesetzt - bei der Materialwahl keine wesentlichen Grenzen gesetzt sind.

Im Rahmen der Erfindung besonders bevorzugt sind Polymer-Kunststoffe mit Eigenschaftswerten bzw. physikalischen Kenndaten, wie sie aus dem **Anspruch** 4 hervorgehen.

Als insbesondere für die Verlegung von Kabeln und deren Abdeckung besonders geeignetes und gleichzeitig relativ kostengünstiges Material hat sich im Rahmen eingehender Testversuche Kunststoffe auf Basis von Hart-PVC bewährt, wie aus dem **Anspruch** 5 hervorgeht.

Der Aufgabe als für Lagerung und Transport problemlos auf einer entsprechenden Trommel aufwickelbares Profilband vorzuliegen und bei der Verlegung vor Ort in eine dreidimensionale, "kontinuierliche" Kabel-Abdeckhaube übergeführt zu werden, wird in günstiger Weise eine Scharnier-Verbindung zwischen Front-Abdeckstreifen und den Flanken-Abdeckstreifen gemäß **Anspruch** 6 gerecht.

Im Zuge der Entwicklungsarbeiten hat sich eine Ordnung von Scharnierkopf und Scharnier-Rinne der Schamierverbindung, wie sie im **Anspruch** 7 geoffenbart ist, als insbesondere aus Gründen der Verschmutzungsanfälligkeit als vorteilhaft erwiesen.

Eine Ausrichtung der Scharnier-Rinnen-Schlitzöffnung zur Wand, Decke od.dgl. bzw. zu den abzudeckenden Kabeln hin, wie sie aus dem **Anspruch** 8 hervorgeht, ist ebenfalls insbesondere in Hinblick auf die schon oben erwähnte Verschmutzungsgefahr günstig.

Vorteilhaft sind Scharnier-Rinnen gemäß **Anspruch** 9, die im Wesentlichen C-Querschnittsform aufweisen.

Eine einfache Ausführungsform des Schamierkopfes an jedem der beiden Flanken-Abdeckstreifen als in der Scharnier-Rinne dreh-gleitbare Walze offenbart der **Anspruch** 10.

Eine weitere Ausführungsvariante des Schamierkopfes an jedem der Flanken-Abdeckstreifen mit einem Nagelkopf-ähnlichen Querschnitt gemäß **Anspruch** 11 hat den Vorteil einer verbesserten Einfädel- bzw. Einführbarkeit beim Vereinigen der Flanken-Abdeckstreifen mit dem Front-Abdeckstreifen zum letztlich einsatzbereiten Kabelabdeck-Profilband. Darüber hinaus ist dadurch ein vergrößerter Einschwenkwinkel der Flanken-Abdichtstreifen zum Front-Abdeckstreifen gewährleistet, sowie weiters eine höhere Flexibilität des gesamten Kabelabdeck-Profilbandes, was dessen Aufspulen auf die Trommel und dessen Abspulen am Ort oder in Nähe des Ortes der Montage erleichtert.

Bevorzugterweise entsprechen - wie aus dem **Anspruch** 12 hervorgeht - die aneinandergleitenden Flächen vom Scharnierkopf am jeweiligen Flanken-Abdeckband und Scharnier-Rinnen am Front-Abdeckband Kreiszylinderflächen.

Was den den nagel artigen Scharnier-Kopf mit dem Flanken-Abdeckstreifen verbindenden Schaft bzw. Hals betrifft, ist eine nach außen gekrümmte Form desselben gemäß **Anspruch** 13 für eine praktisch stufen- bzw. einschnittfreie und daher wenig verschmutzungsanfällige Außenkontur der neuen Abdeckung von Vorteil.

In diesem Sinne ist weiters eine, wie dem **Anspruch** 14 zu entnehmende Angleichung der Krümmung des Schamierkopf-Halsteils und des Außenrand-Bereiches der jeweiligen Scharnier-Rinne des Front-Abdeckstreifens günstig.

Wie aus dem **Anspruch** 15 hervorgeht, ist eine die Ausschwenkbarkeit des jeweiligen Flanken-Abdeckstreifens begrenzende Abstimmung zwischen der Querschnittsform des Scharnier-Kopfes desselben und der Scharnier-Rinne des Front-Abdeckstreifens sowie zwischen der Scharnier-Rinnen-Schlitzöffnung und dem Schamierkopf-Halsteil günstig, da so eine Art Vorspannung beim Überstülpen der verlegten Kabel mit dem neuen bei der Montage in die dritte Dimension aufgefaltenen bzw. aufgeschwenkten Kabelabdeck-Profilband erreicht wird und damit eine Art Hintergreifung der Kabel und so eine zusätzliche Halterung der Abdeckung mit Hilfe der Kabel gesichert werden kann.

Im einzelnen sind dem **Anspruch** 16 die bevorzugten Details dazu zu entnehmen.

Eine für die mechanische Stabilität der montierten Kabetabdeck-Profilbänder wichtige Ausführung stellt die aus dem **Anspruch** 17 hervorgehende Versteifungsrippe der Flanken-Abdeckbänder dar, wobei als deren Vorteil weiters ihre Funktion als Art Einhängeelement für die Abdeckung an den schon verlegten Kabeln gemäß **Anspruch** 18 besonders hervorzuheben ist.

Den **Ansprüchen** 19 und 20 ist zu entnehmen, dass der Front-Abdeckstreifen des neuen Kabelabdeck-Profilbandes vorderseitig eine flache, relativ breite Nut aufweist, welche die Anordnung und rasche Positionierung von die aneinanderstoßenden Enden der neuen Abdeck-Profilbänder, an deren Stoßstellen überdecken und eine deren stabile Fixierung ohne Gefahr einer Ablösung sichernde Montage an den Kabelhaltern ermöglicht.

Besonders bevorzugt ist eine Art der Befestigung des neuen Kabelabdeck-Profilbandes auf den Kabelhalter über ein Einschnapp- bzw. Einrastprofil an der Rückseite des Front-Abdeckbandes gemäß **Anspruch** 21.

Was die, eine weitere wesentliche Komponente der neuen Kabel-Halte-Einrichtung darstellenden Kabelhalter betrifft, ist eine Ausführungsform gemäß **Anspruch** 22 besonders bevorzugt.

Der **Anspruch** 23 gibt für die Stabilität der Halterung der Kabel bzw. Kabelstränge vorteilhafte Details des neuen Kabelhalters wieder.

An sich sind der Art einer stabilen Verbindung des neuen Abdeck-Profilbandes in der montagefertigen dreidimensionalen Form mit den Kabelhaltern für die Kabelführung keine wesentlichen Grenzen gesetzt. So kommen alle Arten der Montage in Frage, welche möglichst wenig Montageaufwand erfordern, insbesondere etwa federnde Schnapp-, Rast- oder Klipp-Verbindungen.

Im Rahmen der vorliegenden Erfindung besonders bevorzugt ist eine längsmittig angeordnete derartige Schnapp- bzw. Rast-Verbindung zwischen Kabelabdeck-Profilband und Kabelhaltern gemäß **Anspruch** 24.

Für die Befestigung der Kabelhalter an den Wänden, Decken od.dgl. von unterirdischen Bauwerken, insbesondere solchen des Kanalsystems, hat sich eine mittige Ein-Schrauben-Verbindung gemäß **Anspruch** 25 als wenig arbeitsintensiv und gleichzeitig voll ausreichend für eine Langzeitstabilität der Halterung erwiesen.

Eine rasche und gegen ein Lösen der Schnappverbindung zwischen Kabelabdeck-Profilband und Kabelhalter gewährleistende stabile Fixierung der Abdeckband-Enden an den Stellen, wo dieselben aneinander stoßen, lässt sich gemäß **Anspruch** 26 mit - keine besonders exakte Positionierung der Befestigungsschrauben für das die Stoßstelle überbrückende Stoßabdeckplättchen erfordernden - Schlitzöffnungen für die Einbringung der das eben genannte Stoß-Abdeckplättchen durchdringenden und sich in den Flanken der eben genannten Schlitzöffnungen beiderseitig der zentralen Befestigung des Kabelhalters an der Wand, Decke od.dgl. verankernden, selbstschneidenden Schrauben erzielen.

Günstig ist es weiterhin, wenn der Kabelhalter, wie gemäß **Anspruch** 27 vorgesehen, Ösen, Laschen, Haken, Öffnungen od.dgl. für die Verankerung der Kabelbinder zur Fixierung der Kabel aufweist.

Nicht zuletzt ist es von Vorteil, wie gemäß **Anspruch** 28 vorgesehen, am Kabelhalter eine Art Anzeiger für jene Stelle vorzusehen, wo die mittige bzw. zentrale Halterungsschraube für die Befestigung des Kabelhalters an der Wand angeordnet ist, sodass die beiden rechts und links von derselben angeordneten Schlitzöffnungen für die Schneidverankerung der Schrauben für die Befestigung der Stoß-Abdeckplättchen an den Stößen von aneinandergrenzenden Kabelabdeck-Profilbändern problemlos und ohne Störung der zentralen Befestigungsschraube zur Verfügung stehen.

Der **Anspruch** 29 nennt eine für die Kabelhalter bevorzugt einzusetzende Klasse von Kunststoffen.

Schließlich besteht ein weiterer Gegenstand der vorliegenden Erfindung in einem neuen Verfahren zur Ausbildung der Abdeckung einer Montage- und Abdeckeinrichtung für entlang von Wänden, Wandungen, Decken od.dgl., insbesondere von unterirdisch verlaufenden Rohren, Gewölben, Tunnels, Kanälen, Schächten od.dgl., vorzugsweise von (Abwasser-) Kanalsystemen, zu verlegende Kabel bzw. Kabelstränge für Telefonie, Datenströme, Stromtransport u.dgl., insbesondere Glasfaser- bzw. Lichtleiter-Kabel bzw. Kabelstränge, mit voneinander beabstandet an die genannten Wände bzw. Wandungen, Decken od.dgl. montierten Kabelhaltern und einer auf bzw. an denselben befestigbaren, die Kabel bzw. Kabelstränge im Wesentlichen umgreifender Abdeckung, die vorher in ihren Details genau beschrieben worden ist.

Dieses Verfahren ist gemäß **Anspruch** 3 0 im Wesentlichen dadurch gekennzeichnet,
- dass die, insbesondere im Zustand für Lagerung und Transport, jeweils auf gesonderten Aufspulorganen, wie Trommeln, Spulen, Rollen, Walzen od.dgl., aufgespulten drei Abdeck-Streifen, nämlich der Front-Abdeckstreifen und die beiden Flanken-Abdeckstreifen nach ihrer Verbringung in den Bereich der Montage- bzw. Vorlegestelle längen-synchron von ihren Aufspulorganen abgespult werden, und
- dass im Wesentlichen nach Art des Schließens eines zahnlosen Pseudo-Reißverschlusses - die Flanken-Abdeckbänder, bevorzugt gleichzeitig, durch druck-unterstütztes Einbringen ihrer Scharnier-Köpfe durch die - infolge der Druckeinwirkung sich elastisch aufweitenden - Schlitzöffnungen der beiden Scharnier-Rinnen des Front-Abdeckbandes zu dem Abdeck-Profilband, bevorzugt in dessen für die Befestigung als Abdeckung an den Kabelhaltern bereiten Zustand mit von dem Front-Abdeckstreifen weggeklappten Flanken-Abdeckstreifen, zusammengefügt bzw. vereinigt werden.

Anhand der Zeichnung wird die Erfindung näher erläutert:

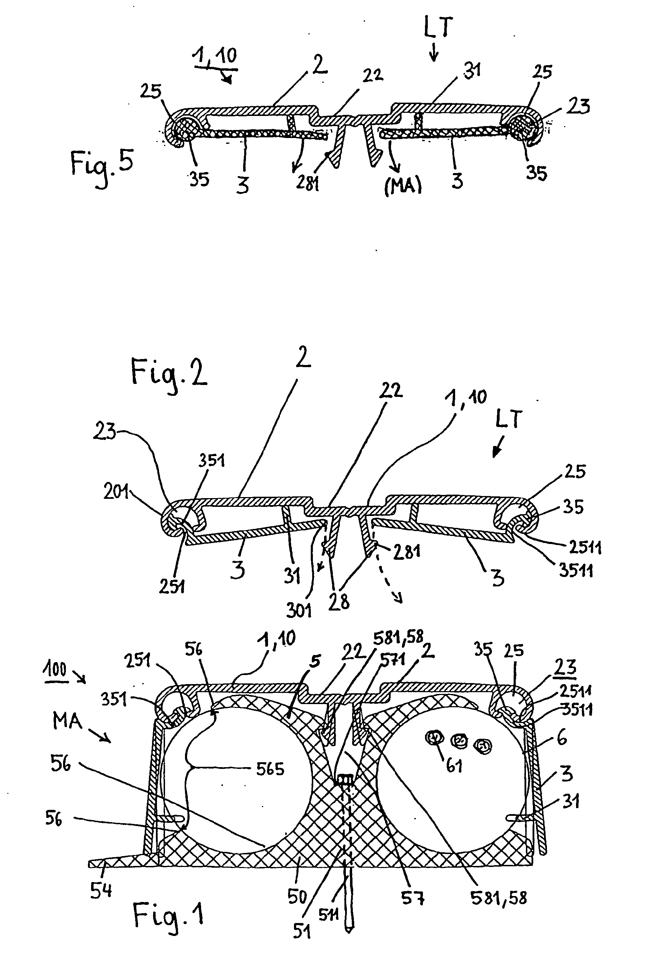

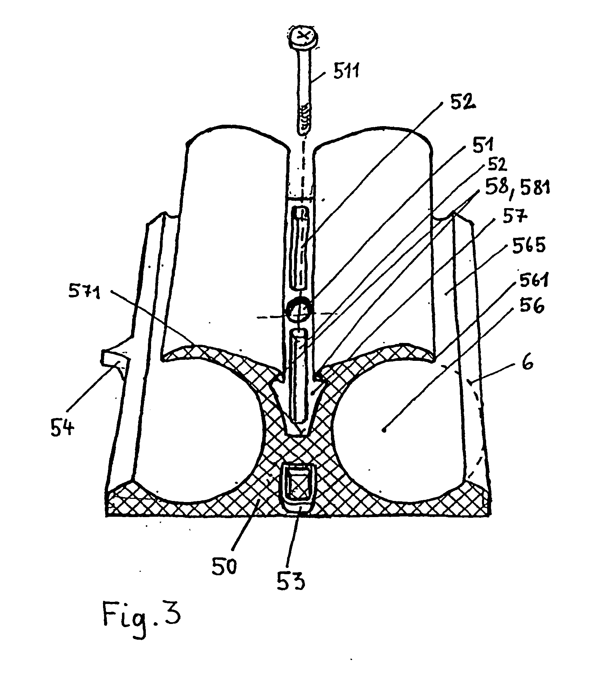

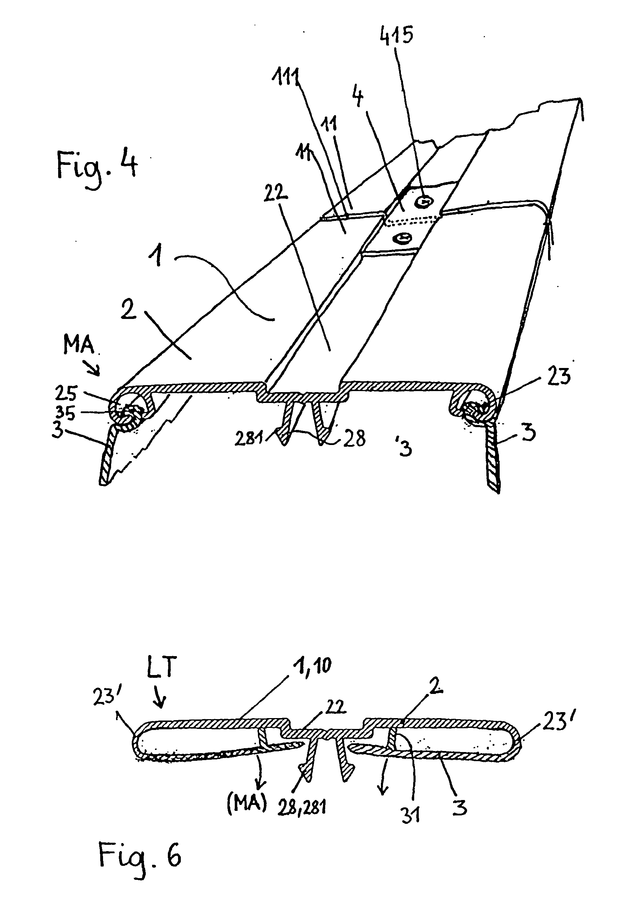

Es zeigen die Fig. 1 einen Schnitt durch die erfindungsgemäße Kabelhalte- und Abdeckeinrichtung mit einem Kabelhalter und einem darauf angeordneten, kontinuierlichen Abdeckband in einer ersten Ausführungsform; die Fig. 2 einen Schnitt durch das Profilband gemäß Fig. 1 in der Ausführungsform mit einem Scharnier zwischen Front-Abdeckstreifen und den beiden Flanken-Abdeckstreifen, die Fig. 3 eine Schrägansicht eines erfindungsgemäßen Kabelhalters von oben, die Fig. 4 eine Schrägansicht einer sich auf einem Kabelhalter befindlichen Stoßstelle zwischen den beiden Enden von zwei aneinandergrenzenden Kabelabdeck-Profilbändern gemäß der Erfindung, die Fig. 5 eine zweite Ausführungsform des erfindungsgemäß vorgesehenen aufspulbaren Kabelabdeck-Profilbandes mit einem einfachen Faltgelenk zwischen den es bildenden Flanken-und Front-Abdeckstreifen, und schließlich die Fig. 6 eine dritte Form eines Kabelabdeck-Profilbandes mit einem einfach gebauten Scharnier.

Die Schnittansicht der Fig. 1 zeigt die erfindungsgemäße Kabel-Montage- und Abdeck-Einrichtung 100, mit einem Kabelhalter 5 mit einer Basiskonsole 50 und zwei etwa in symmetrischer Doppel-C-Form angeordneten Kabelhalteschalen 56, in denen der Umriss eines jeweils in dieselben eingelegten Kabels 6 mit z.B. Lichtleit-Adem 61 in dünner Linie angedeutet ist. Die - im Rahmen der nachfolgenden Fig. 2 dann noch näher erläuterte - erfindungsgemäße Kabelabdeckung 10 ist durch ein Kabelabdeck-Profilband 1 mit einem Front-Abdeckstreifen 2 und mit zwei über jeweils randständige Scharnier-Verbindungen 23 mit demselben gelenkig verbundenen Flanken-Abdeckstreifen 3 gebildet. Das Kabelabdeck-Profilband 1 ist über eine Einhak- bzw. Einschnapp-Verbindung 28-58 mit Einhak- bzw. Einschnappnasen 281 am Front-Abdeckstreifen an mit demselben einhak- bzw. einschnappkooperierenden Gegen-Einhaknasen 581 des Kabelhalter 5 fixiert.

Dem Kabelhalter 5 zugewandt, ragt von jedem der die Kabel 6 in der Abdeck- und Montagestellung (AM) seitlich abdeckenden Flanken-Abdeckstreifen 3' eine Versteifungsrippe 31 nach innen, und es ist gezeigt, wie mittels dieser Rippe 31 jeweils eine Art Hintergreifung der beiden Kabel 6 erfolgt, welche einen zusätzlichen stabilisierenden Faktor für die Kabelbefestigung darstellt. Unterstützt wird diese stabilisierende Wirkung durch eine nur einen Maximal-Schwenkwinkel a zulassende Schwenkbegrenzung in der Scharnierverbindung 23, welche eine - wenn auch nicht große - Aufbiegung der Flanken-Abdeckstreifen 3 erforderlich macht, wodurch die beiden Versteifungsrippen 31 mit einer gewissen elastischen Vorspannung gegen die Kabel 6 gedrückt sind, dort, wo deren Querschnitts-Krümmung in Richtung zur Kabelhalter-Basiskonsole 50 hin abfällt.

Gezeigt ist weiters eine Art talartiger Einschnitt 57 zwischen den Rücken der beiden Kabelhalteschalen 56, welcher an seinen beiden oberen Rändern die beiden oben schon kurz erwähnten Gegen-Einhak- bzw. -Einschnapp-Nasen 581 trägt und von dessen Grund 571 aus eine Befestigungsschraube 511 od.dg. durch die zentrale Montageöffnung 51 in der Kabelhalter-Basiskonsole 50 hindurchgeführt ist.

Die Ränder 561, 562 der Öffnung 565 der C-Querschnitt aufweisenden Kabelschalen 56 haben einen Abstand voneinander, welcher etwas geringer ist, als der Innendurchmesser ds der Kabelhalteschale 56, sodass beim Einlegen des Kabels 6 mit einem entsprechenden, - wie in der Fig. 1 gezeigten - Durchmesser ein elastisches Aufweiten der C-Öffnung 565 der Kabelschale 56 nötig ist, um das Kabel 6 in die Kabelhalterschale 56, einzubringen, das dann durch deren in die ursprüngliche Lage zurückkehrende Ränder 561, 562 lagefixiert ist.

Zu sehen ist weiters, dass der Front-Abdeckstreifen 2 mittig eine flache Nut 22 aufweist, deren Funktion ebenfalls bei der Erläuterung der Fig. 2 noch näher erklärt werden wird, sowie linksseitig ein Vorsprung der Basiskonsole, welcher ein Indikator 54 ist, dessen Funktion bei der Erläuterung der Fig. 3 näher erklärt werden wird.

Die Fig. 2 zeigt - bei ansonsten gleichbleibenden Bezugszeichenbedeutungen - eine Schnittansicht des neuen aufspulbaren Kabelabdeck-Profilbandes 1 in einem Zustand, in dem es sich z.B. auf einer Aufspultrommel vor einer Montage an Ort und Stelle in einem Kanal od.dgl. befindet: Es sind dort die beiden Flanken-Abdeckstreifen 3 zum Front-Abdeckstreifen 2 hin eingeschwenkt bzw. eingeklappt, und es sind dort die Lage- und Verbindungs-Verhältnisse der miteinander zusammenspielenden Einzelteile der Scharnierverbindungen 23 gezeigt.

Diese Scharnierverbindungen 23 zwischen Front-Abdeckstreifen 2 und den beiden Flanken-Abdeckstreifen 3 sind jeweils durch eine, den Seitenrändern 201 des Front-Abdeckstreifens entlang sich erstreckende, im Wesentlichen C-Form aufweisende Schamier-Rinne 25 gebildet, in welcher der etwa nagelkopfartige Scharnier-Kopf 35 des jeweiligen Flanken-Abdeckstreifens 3 drehschwenk-gleitbar ist. In der gezeigten "Einklapp-Stellung" LT für Lagerung und Transport ist der Scharnierkopf 35 des Flanken-Abdeckstreifens 3 jeweils am Endpunkt seiner Drehgleitbewegung innerhalb der Scharnier-Rinne 25 angelangt.

Von dem nagelkopfartigen Scharnier-Kopf 35 geht in der gezeigten Stellung LT ein sich fast rechtwinkelig nach abwärts bzw. nach außen gekrümmter Hals- bzw. Schaft 351 aus, welcher die hier nach abwärts weisende Schlitzöffnung 251 der Scharnier-Rinne 25 durchsetzt und etwa rechtwinkelig in den Flanken-Abdeckstreifen 3 mit seiner Verstärkungsrippe 31 mündet. Die freien Ränder 301 der Flanken-Abdeckstreifen 3 sind so positioniert, dass sie bei dessen Ausschwenken vom Front-Abdeckstreifen 2 weg auf den Widerstand der dieser Ausschwenkbewegung etwas im Wege stehenden Einhak- bzw. Einschnappnasen 281 des Einhak- bzw. Einschnapp-Elements 28 des Front-Abdeckstreifens 2 stoßen. Damit ist ein unbeabsichtigtes oder selbständiges Aufklappen der Flanken-Abdeckstreifen 3 und somit eine eventuelle Störung der Aufspulbarkeit des neuen Kabelabdeck-Profilbandes 1 wirkungsvoll verhindert.

Sollen nun die Flanken-Abdeckstreifen 3 für die Aufbringung der neuen Abdeckung 1 an der Verlegestelle in die Montage- bzw. Abdeck-Stellung MA gemäß Fig. 1 ausgeklappt werden, kann der oben beschriebene Widerstand der Einhaknasen 281 durch entsprechend leicht erhöhte Kraftaufwendung beim Aufklappen der Flanken-Abdeckstreifen 3 überwunden werden, wobei die Nasen 281 federnd etwas zurückweichen und somit dieses Ausklappen ermöglichen.

An dieser Stelle sei auf die Fig. 1 verwiesen, welche das neue Kabelabdeck-Profilband 1 im fertig montierten Zustand MA mit praktisch schon erfolgter Einhakverbindung 28-38 und ausgeklappten und federnd nach außen gespannten Flanken-Abdeckstreifen 3 zeigt. In dieser Stellung sitzt bzw. "hängt" der nagelkopfartige Scharnier-Kopf 35 voll in der Scharnier-Rinne 25 zwischen den beiden Rändern ihrer Schlitzöffnung 251. Der winkelig nach außen hin gekrümmte Schaft 351 des Scharnier-Kopfes 35 schmiegt sich nach seinem Austritt aus der Rinnen-Schlitzöffnung 251 mit seiner Krümmung 3511 krümmungsgleich an die Krümmung 2511 der von der genannten Schlitzöffnung 251 nach außen hin anschließenden Zone der Außenfläche der Scharnier-Rinne 25 an.

Die Flanken-Abdeckstreifen 3 stehen etwas unter Spannung und drücken mit Ihren Versteifungsrippen 31 dort auf die Kabel 6, wo deren äußere Kontur jeweils ihr Maximum schon überschritten hat.

Die schräge Draufsicht der Fig. 3 zeigt - bei ansonsten gleichbleibenden Bezugszeichenbedeutungen - den Kabelhalter 5 mit den Doppel-C-Form aufweisenden Kabelhalteschalen 56, den Gegen-Einschnappnasen 381 und der mittigen Montageöffnung 51 näher. Neben dieser Öffnung 51 sind sich entlang des Grundes 571 des Einschnitts 57 hinziehende und in die Kabelhalter-Basiskonsole 50 eingearbeitete, längliche Schlitzöffnungen 52 für die Verankerung von sich in deren Flanken einschneidenden Schrauben für die Fixierung der Enden von aneinander anschließenden Kabelabdeck-Profilbändern 1 im Bereich ihrer Stoßstellen vorgesehen.

Ebenfalls längsmittig ragt nach vorne und nach rückwärts (nicht sichtbar) jeweils eine Öse 53 od.dgl. für die Halterung von Kabelbindern für die Fixierung der Kabel 6 weg. Seitlich ragt, in der Fig. 3 nur nach einer Seite hin, eine Art Zeiger oder Pfeilspitze 54 von der Basiskonsole 50 weg nach außen, welche ein die Position der mittigen Befestigungsöffnung 51 für die dieselbe durchsetzende Befestigungsschraube 511 anzeigenden Indikator ist. Dieser Indikator 54 soll sicherstellen, dass die zwei oben erwähnten, selbstschneidenden Schrauben für die Fixierung der stumpf aneinanderstoßenden Enden zweier einander fortsetzender Kabelabdeck-Profilbänder jeweils in einem Abstand von dieser mittigen Befestigungsstelle 51 in die vorher erwähnten Verankerungs-Schlitzöffnungen 52 rechts und links dieser zentralen Öffnung 51 des Kabelhalters 5 ohne Störung eingebracht werden können.

Anstelle einer der Zeigerspitze 54 kann auch eine Kerbe, eine Farbmarkierung, eventuell mit einer Luminiszenzfarbe od.dgl., vorgesehen sein.

Die Fig. 4 zeigt - bei ansonsten gleichen Bezugszeichenbedeutungen - bloß eine wie oben erwähnte Stoßstelle 111 zwischen den beiden Enden 11 von zwei einander fortsetzenden Kabelabdeck-Profilbändern 1 und wie dieselbe von einem in der Nut 22 des Front-Abdeckstreifens 2 positionierten Stoßabdeck-Plättchen 4, bevorzugt aus Blech, überbrückt ist bzw. sind, welches Plättchen 4 seinerseits mittels rechts und links der Stoßstelle anzuordnenden Schrauben 415, gehalten ist, die durch das Blechplättchen 4 getrieben und in den vorerwähnten Schlitzöffnungen 52 in der Basiskonsole 50 des Kabelhalters 5, siehe Fig. 3, selbstschneidend verankert sind.

Die Fig. 5 zeigt - bei ansonsten gleichbleibenden Bezugszeichenbedeutungen - eine weitere, besonders einfache Ausführungsform des erfindungsgemäßen Kabelabdeck-Profilbandes 1, das einstückig ausgebildet ist und durch entsprechende Einmalige Extrusion hergestellt werden kann, wobei die beiden Flanken-Abdeckstreifen 3 über eine biegefreundliche, biegeelastische Faltverbindung 23' anstelle eines dort angeordneten Scharniers mit dem Front-Abdeckstreifen 2 verbunden sind.

Die Fig. 6 zeigt - bei ansonsten gleichbleibenden Bezugszeichenbedeutungen - die Teilansicht eines Schnittes durch eine zweite Ausführungsform des neuen Kabelabdeck-Profilbandes 1 mit einer sehr einfach gebauten Scharnier-Verbindung 23, welche etwa nach dem Prinzip eines menschlichen Gelenks gebaut ist und einen die Scharnier-Rinne 25 im Wesentlichen voll ausfüllenden, die Form einer in dieser Rinne 25 drehgleitbaren Walze aufweisenden Scharnierkopf 35 aufweist.

## Patentansprüche

1. Montage- und Abdeck-Einrichtung für entlang von Wänden, Wandungen, Decken od.dgl., insbesondere von unterirdisch verlaufenden Rohren, Gewölben, Tunnels, Kanälen, Schächten od.dgl., vorzugsweise von (Abwasser-) Kanalsystemen, zu verlegende Kabel (6) bzw. Kabelstränge für Telefonie, Datenströme, Stromtransport u.dgl., insbesondere Glasfaser- bzw. Lichtleiter-Kabel bzw. Kabelstränge, mit voneinander beabstandet an die genannten Wände bzw. Wandungen, Decken od.dgl. montierten Kabelhaltern (5) und einer auf bzw. an denselben befestigbaren, die Kabel (6) bzw. Kabelstränge im Wesentlichen umgreifenden Abdeckung (10), **dadurch gekennzeichnet,**
- **dass** die Abdeckung (10) als auf mindestens einem Aufspulorgan, insbesondere Trommel, Spule, Rolle, Walze od.dgl. aufspulbares und für die Montage von demselben abspulbares bzw. abwickelbares Kabelabdeck-Profilband (1) mit einem Front-Abdeckstreifen (2) und von dessen beiden Seitenrändern (201) ausgehenden Flanken-Abdeckstreifen (3) ausgebildet ist,
- **dass** die beiden Seiten-Abdeckstreifen (3) über eine Biege- oder Falt-Verbindung (23') oder aber über eine Gelenk-Verbindung, bevorzugt über eine Scharnier-Verbindung (23), mit dem Front-Abdeckstreifen (2) verbunden sind,
- **dass** die beiden Seiten-Abdeckstreifen (3) des Kabelabdeck-Profilbands (1) in dessen insbesondere für Lagerung und Transport aufgespultern Zustand (LT) mit ihren freien Seitenrändern (301) aufeinander zu eingeklappt sind und sich in gleicher Richtung wie der Front-Abdeckstreifen (2) bzw. im Wesentlichen parallel zu demselben erstrecken, und
- **dass** - für das Befestigen des die Kabel-Abdeckung (10) bildenden Profilbandes (1) auf den Kabelhaltern (5) sowie für das umgreifende Abdecken der von denselben gehaltenen Kabel (6) bzw. Kabelstränge jeder der beiden Flanken-Abdeckstreifen (3) durch Auffalten, Aufklappen bzw. Auf-Wegschwenken vom Front-Abdeckstreifen (2) weg in eine Montage- und Abdeck-Stellung (MA) quer bzw. im Wesentlichen senkrecht zu dessen Erstreckung verbringbar ist.

2. Einrichtung nach Anspruch 1, **dadurch gekennzeichnet,**
- **dass** die Kabel-Abdeckung (10) bzw. das dieselbe bildende Profilband (1) mit Gelenksverbindungen, insbesondere Scharnier-Verbindungen (23), zwischen dem Front-Abdeckstreifen (2) und den beiden Flanken-Abdeckstreifen (3) ausgebildet ist, wobei jeder der soeben genannten Abdeckstreifen (2,3) für Lagerung und Transport auf einem eigenen Aufspulorgan gesondert aufgespult bzw. aufgewickelt ist, und
- **dass** die drei Abdeckstreifen (2,3,3) im Wesentlichen erst bei oder knapp vor der Montage der Abdeckung (10) zu dem Ensemble des sich in Montage- und Abdeckstellung (MA) befindlichen Kabelabdeck-Profilbandes (1) aus Front-Abdeckstreifen (2) und beidseitig mit demselben über die Scharnier-Verbindungen (23) gelenkig verbundenen, jeweils quer zur Erstreckung des Front-Abdeckstreifens (2) von demselben weggeklappten bzw. wegragenden Flanken-Abdeckstreifen (3) zusammenfügbar bzw. vereinigbar sind.

3. Einrichtung nach Anspruch 1 oder 2, **dadurch gekennzeichnet, dass** die insgesamt das Abdeck-Profilband (1) bildenden Abdeckstreifen (2,3) aus einem in Längserstreckungsrichtung aufspul-biegsamen und quer zur Erstreckungsrichtung im Wesentlichen federnd elasto-flexiblem Kunststoff- bzw. Polymer-Material gefertigt sind.

4. Einrichtung nach einem der Ansprüche 1 bis 3, **dadurch gekennzeichnet, dass** das Kunststoff- bzw. Polymermaterial des Abdeck-Profilbandes (1) folgende Materialkenndaten aufweist:
| | | |
|---|---|---|
| Formbeständigkeit nach Martens | (DIN 53462) | 65-70°C und/oder |
| Formbeständigkeit nach Vicat (Verfahren B) | (DIN 53460) | 75-88°C 0,16 W/km und/oder |
| Zugfestigkeit | (DIN 53455) | 45-55 N/mm² und/oder |
| Bruchdehnung | (DIN 53455) | 10-20%, vzgsw. 14-16%, und/oder |
| Grenzbiegespannung | (DIN 53452) | 80-120 N/mm², vzgsw. 90-110 N/mm², und/oder |
| Elastizitätsmodul | (DIN 53457) | 2500-3500 N/m2, vzgsw. 2800-3200 N/mM², insbes. 2950-3050 N/mm² |

5. Einrichtung nach einem der Ansprüche 1 bis 4, **dadurch gekennzeichnet, dass** die die insgesamt das Abdeck-Profilband (1) bildenden Abdeckstreifen (2,3) aus einem Hart-Polyvinylchlorid(PVC)-Kunststoff gefertigt sind.

6. Einrichtung nach einem der Ansprüche 1 bis 5, **dadurch gekennzeichnet, dass** jede der Scharnier-Verbindungen (23) zwischen dem Front-Abdeckstreifen (2) und den Flanken-Abdeckstreifen (3) des Abdeck-Profilbandes (1) jeweils mit einer hinterschnitten offenen Scharnier-Rinne (25) und einem in derselben drehgleitend verschwenkbaren Scharnier-Kopf (35) gebildet ist.

7. Einrichtung nach einem der Ansprüche 1 bis 6, **dadurch gekennzeichnet, dass** die Scharnier-Rinnen (25) am Front-Abdeckstreifen (2) und die Scharnier-Köpfe (35) an den Flanken-Abdeckstreifen (3) ausgebildet sind.

8. Einrichtung nach einem der Ansprüche 1 bis 7, **dadurch gekennzeichnet, dass** die schlitzartige, hinterschnittene Öffnung (251) der Scharnier-Rinne (25) des Front-Abdeckstreifens (2) des Abdeck-Profilbandes (1) zu den Kabelhaltern (5) und zu den von denselben gehaltenen Kabeln (6) hin ausgerichtet ist.

9. Einrichtung nach einem der Ansprüche 1 bis 8, **dadurch gekennzeichnet, dass** die Scharnier-Rinne (25) des Front-Abdeckstreifens (2) im Wesentlichen eine dem Großbuchstaben "C" entsprechende Querschnittsform aufweist.

10. Einrichtung nach einem der Ansprüche 1 bis 9, **dadurch gekennzeichnet, dass** die Scharnier-Köpfe (35) der beiden Flanken-Abdeckstreifen (3) des Kabelabdeck-Profilbandes (1) jeweils nach Art von mit ihrer Oberfläche an der Innenseite der Scharnier-Rinnen (25) des Front-Abdeckstreifens (2) dreh-gleitbaren Scharnier-Walzen ausgebildet sind.

11. Einrichtung nach einem der Ansprüche 1 bis 10, **dadurch gekennzeichnet, dass** die in der Scharnier-Rinne (25) dreh-gleitbaren Scharnier-Köpfe (35) der beiden Flanken-Abdeckstreifen (3) des Kabelabdeck-Profilbandes (1) jeweils einen Querschnitt nach Art eines Nagelkopfes aufweisen, dessen Oberseite eine der Konkav-Krümmung der Innenflächen der Scharnier-Rinnen (25) entsprechende Konvex-Krümmung aufweist.

12. Einrichtung nach einem der Ansprüche 1 bis 11, **dadurch gekennzeichnet, dass** die Konkav-Krümmung der Scharnier-Rinnen (25) des Front-Abdeckstreifens (2) und die Konvex-Krümmung der Scharnier-Köpfe (35) der beiden Flanken-Abdeckstreifen (3) des Kabelabdeck-Profilbandes (1) jeweils im Wesentlichen aneinander bzw. ineinander drehgleit-anpassende Kreisbogen-Krümmungen sind.

13. Einrichtung nach einem der Ansprüche 1 bis 12, **dadurch gekennzeichnet, dass** sich von dem in seiner Querschnittsform nach Art eines Nagelkopfes ausgebildeten Scharnier-Kopf (35) jedes der Flanken-Abdeckstreifen (3) ein die Schlitzöffnung (251) der Scharnier-Rinnen (25) des Front-Abdeckstreifens (2) durchsetzender, sich nach außen krümmender Hals bzw. Schaft (351) wegerstreckt, der dann abgewinkelt in den jeweiligen Flanken-Abdeckstreifen (3) übergeht.

14. Einrichtung nach einem der Ansprüche 1 bis 13, **dadurch gekennzeichnet, dass** die Konkavseite (3511) der Krümmung des Schaftes (351) des nagelartig ausgebildeten Scharnier-Kopfes (35) des Flanken-Abdeckstreifens (3) der Konvex-Krümmung (2511) der Außenseite des an den außenliegenden Rand der Schlitzöffnung (251) der Gelenks-Rinne (25) des Front-Abdeckstreifens (2) unmittelbar anschließenden Bereiches der genannten Rinne (25) entsprechend ausgebildet ist.

15. Einrichtung nach einem der Ansprüche 1 bis 14, **dadurch gekennzeichnet, dass** die Schlitzöffnung (251) der Gelenks-Rinne (25) des Front-Abdeckstreifens (2) und der nagelkopfartige Scharnier-Kopf (35) des jeweiligen Flanken-Abdeckstreifens (3) für eine Begrenzung des Aufschwenkens bzw. -klappens des jeweiligen Flanken-Abdeckstreifens (3) bis zu einem jeweils vorgegebenen Maximal-Schwenkwinkel (α), bevorzugt im Bereich um 90°, zusammenwirkend ausgebildet sind.

16. Einrichtung nach einem der Ansprüche 1 bis 15, **dadurch gekennzeichnet, dass** bei einem den Maximal-Schwenkwinkel (α) überschreitenden Ausschwenken des jeweiligen Flanken-Abdeckstreifens (3) vom Front-Abdeckstreifen (2) der Flanken-Abdeckstreifen (3) im Wesentlichen federelastisch aufbiegbar und gegebenenfalls in eine z.B. an den Kabelhaltern(5) vorhandene Hinterschneidung od.dgl. eingreifend einschnappbar bzw. einrastbar ist, oder der an der wand-zugekehrten Abwärtskrümmung der Kabel (6) einhängbar bzw. abstützbar ist.

17. Einrichtung nach einem der Ansprüche 1 bis 16, **dadurch gekennzeichnet, dass** jeder der beiden Flanken-Abdeckstreifen (3) des Kabelabdeck-Profilbands (1) an seiner Innenseite eine in dessen Erstreckungsrichtung sich hinziehende Versteifungs-Rippe (31) od.dgl aufweist.

18. Einrichtung nach Anspruch 17, **dadurch gekennzeichnet, dass** die Versteifungs-Rippe (31) für ein Einschnappen bzw. Einrasten in einer Einschnapp-Vertiefung, -Hinterschneidung od.dgl. der Kabelhalter (5) oder aber bloß an der wandungs-zugekehrten Seite der Kabel (6) einhängbar bzw. abstützbar ausgebildet ist.

19. Einrichtung nach einem der Ansprüche 1 bis 18, **dadurch gekennzeichnet, dass** der Front-Abdeckstreifen (2) des Abdeck-Profilbands (1), bevorzugt mittig, eine flache Nut (22) aufweist.

20. Einrichtung nach Anspruch 19, **dadurch gekennzeichnet, dass** die flache Nut (22) für die Aufnahme und Positionierung eines den Stoß (111) der Enden (11) zweier aneinander grenzender Abdeck-Profilbänder (1) überbrückenden und mittels am bzw. im Kabelhalter . (5) verankerbaren Befestigungselementen, wie insbesondere selbstschneidenden Schrauben (511), vorzugsweise beidseitig des genannten Stoßes (111) fixierbaren Stoß-Deck- und -Halteplättchens (4), bevorzugt aus Blech, vorgesehen ist.

21. Einrichtung nach einem der Ansprüche 1 bis 20, **dadurch gekennzeichnet, dass** der Front-Abdeckstreifen (2) für seine Befestigung an den Kabelhaltern (5) an seiner denselben zugewandten (Rück-)Seite mit einem, bevorzugt längsmittig verlaufenden, im Wesentlichen federelastischen Einschnapp- bzw. Einrast-Profil (28) ausgebildet ist, welches in ein entsprechendes, am Kabelhalter (5) ausgebildetes, vorzugsweise auf demselben ebenfalls längsmittig verlaufendes, Gegen-Einschnapp bzw. Einrastprofil (58) einschnapp- bzw. einrastbar ist.

22. Einrichtung nach einem der Ansprüche 1 bis 21, **dadurch gekennzeichnet, dass** der Kabelhalter (5) mit zwei zusammen zueinander symmetrischen Doppel-C-Querschnitt aufweisenden, rinnenartigen Kabelhalteschalen (56) mit jeweils nach außen hin gerichteten Schalenöffnungen (565) ausgebildet ist.

23. Einrichtung nach einem der Ansprüche 1 bis 22, **dadurch gekennzeichnet, dass** zwischen den beiden Kabelhalteschalen (56) ein nach außen hin offener Einschnitt (57) angeordnet ist, und dass der von dem Einschnitt (57) bis zum freien Rand (561) der Kabelhalteschale (56) reichende Abschnitt derselben in begrenztem Maße federnd bzw. auf-federbar ausgebildet ist.

24. Einrichtung nach einem der Ansprüche 1 bis 23, **dadurch gekennzeichnet, dass** in dem Einschnitt (57) zwischen den beiden Kabelhalteschalen (56) als Gegen-Einschnapp- bzw. -Einrastprofil (58), bevorzugt einander zugekehrte, Gegen-Einschnapp- bzw. -Einrast-Nasen (581) für die Einschnapp- bzw. Einrast-Kooperation mit entsprechenden Einschnapp- bzw. Einrast-Nasen (281) des Kabelabdeck-Profilbandes (1) bzw. von dessen Front-Abdeckstreifen (2) angeordnet sind.

25. Einrichtung nach einem der Ansprüche 1 bis 24, **dadurch gekennzeichnet, dass** am Grund (571) des Einschnitts (57) zwischen den beiden Kabelschalen eine die Basiskonsole (50) des Kabelhalters (5), bevorzugt längserstreckungs-mittig, durchsetzende Montageöffnung (51) für die Befestigung des Kabelhalters (5) an einer Wandung, Decke od.dgl., insbesondere eines (Abwasser-)Kanals, vorzugsweise mittels Schraube (511), angeordnet ist.

26. Einrichtung nach einem der Ansprüche 1 bis 25, **dadurch gekennzeichnet, dass** in der Basiskonsole (50) des Kabelhalters (5) beiderseits der Montageöffnung (51), im Wesentlichen ebenfalls vom Grund des Einschnitts (57) zwischen den beiden Kabelhalteschalen (56) ausgehend, jeweils eine die Basiskonsole (50) durchsetzende Schlitzöffnung (52) für die Verankerung von, bevorzugt materialschneidenden, Schrauben für eine Fixierung der stumpf aneinanderstoßenden Enden (11) zweier Kabel-Abdeckbänder (1) mittels Stoß-Deck- und Montageplättchen (4) angeordnet sind.

27. Einrichtung nach einem der Ansprüche 1 bis 26, **dadurch gekennzeichnet, dass** der Kabelhalter (5) zumindest auf einer Seite zumindest eine, bevorzugt jedoch beidseitig jeweils eine, vorzugsweise mittig angeordnete Öse (53), einen Stift, einen Haken od.dgl. für die Fixierung eines Kabelbinders für die in den Kabelhalteschalen (56) angeordneten Kabel (6) bzw. Kabelstränge, vorzugsweise für Kabel geringeren Durchmessers als der der Halteschalen (56), aufweist.

28. Einrichtung nach einem der Ansprüche 1 bis 27, **dadurch gekennzeichnet, dass** die Basiskonsole (50) des Kabelhalters (5) einen die, bevorzugt mittige, Position der Montageöffnung (51) anzeigenden Indikator, wie insbesondere eine Kerbe, eine Farb- bzw. Leuchtfarb-Markierung, einen von der Basiskonsole (50) wegragenden Zeiger (54) od.dgl., aufweist.

29. Einrichtung nach einem der Ansprüche 1 bis 28, **dadurch gekennzeichnet, dass** die Kabelhalter (5) aus einem, bevorzugterweise (glas)faserverstärkten, Kunststoff, insbesondere aus einem ABS-Kunststoff, gefertigt sind.

30. Verfahren zur Ausbildung der Abdeckung (10) einer Montage- und Abdeck-Einrichtung für entlang von Wänden, Decken od.dgl., insbesondere von unterirdisch verlaufenden Rohren, Kanälen, Gewölben, Tunnels, Schächten od.dgl., von (Abwasser-) Kanalsystemen, zu verlegende Kabel (6) bzw. Kabelstränge für Telefonie, Datenströme, Stromtransport u.dgl., insbesondere Glasfaser- bzw. Lichtleiter-Kabel bzw. Kabelstränge mit in, an oder auf voneinander beabstandet an die genannten Wände bzw. Wandungen, Decken od.dgl. montierten Kabelhaltern (5) und einer auf bzw. an denselben befestigbaren, die Kabel (6) bzw. Kabelstränge im Wesentlichen umgreifenden Abdeckung (10), nach einem der Ansprüche 1 bis 29, insbesondere nach einem der Ansprüche 2 bis 29, **dadurch gekennzeichnet,**
- **dass** die, insbesondere im Zustand (LT) für Lagerung und Transport, jeweils auf gesonderten Aufspulorganen, wie Trommeln, Spulen, Rollen, Walzen od.dgl., aufgespulten drei Abdeck-Streifen, nämlich der Front-Abdeckstreifen (2) und die beiden Flanken-Abdeckstreifen (3) nach ihrer Verbringung in den Bereich der Montage- bzw. Vorlegestelle längen-synchron von ihren Aufspulorganen abgespult werden, und
- **dass**, im Wesentlichen nach Art des Schließens eines zahnlosen Pseudo-Reißverschlusses, die Flanken-Abdeckstreifen (3) - durch druck-unterstütztes, bevorzugt gleichzeitiges, Einbringen ihrer Scharnier-Köpfe (35) durch die - infolge der Druckeinwirkung sich elastisch aufweitenden - Schlitzöffnungen (251) der beiden Scharnier-Rinnen (25) des Front-Abdeckstreifens (2) in diese Scharnier-Rinnen (25) - mit dem Front-Abdeckstreifen (2) zu dem Abdeck-Profilband (1), bevorzugt in dessen für die Befestigung als Abdeckung (10) an den Kabelhaltern (5) bereiten Zustand (MA) mit von dem Front-Abdeckstreifen (2) weggeklappten Flanken-Abdeckstreifen (3), zusammengefügt bzw. vereinigt werden.

## Claims

1. Installation and cover device for cables or cable strands for telephony, data streams, current transport and the like, particularly glass fibre or photoconductor cables (6) or cable strands, to be laid along walls, partitions, ceilings or the like, particularly of tubes, vaults, tunnels, channels, shafts or the like, which extend in the underground, preferably of (sewer) channel systems, comprising cable clamps (5) mounted in spaced relationship onto said walls or partitions, ceilings or the like, and a cover (10) to be fastened to them, which substantially embraces the cables (6) or cable strands,
**characterised in**
- **that** the cover (10) is formed as a cable covering profile band (1) having a front cover strip (2) and flank cover strips (3) originating from its two lateral margins (201), which may be wound up on at least one wind-up member, particularly a drum, a bobbin, a roll, a roller or the like, and which may be unreel or unwound from it for the installation,
- **that** the two lateral cover strips (3) are connected to the front cover strip (2) by a bending or folding connection (23') or by an articulated joint, preferably a hinge joint (23),
- **that** the free lateral margins (301) of the two lateral cover strips (3) of the cable cover profile band (1) in its reeled condition, particularly for storing or transporting, are folded to one another and extend in the same direction as the front cover strip (2) or substantially parallel thereto, and
- **that**, for fastening the profile band (1), that forms the cable cover (10), on the cable clamps (5), as well as for an embracing covering of the cables (6) or cable strands held by them, each one of the two flank cover strips (3) may be transferred away from the front cover strip (2) into an installation and covering position transversely or substantially perpendicularly to its extension by unfolding, swinging open or pivoting open and away.

2. Device according to claim 1, **characterised in**
- **that** the cable cover (10), or the profile band (1) forming it, is provided with articulated connections, particularly hinge connections (23), between the front cover strip (2) and the two flank cover strips (3), wherein each one of said cover strips (2, 3) is reeled or wound up separately, and
- **that** the three cover strips (2, 3, 3) are to be assembled or joint to an assembly of the cable cover profile band (1), when being in installation or covering position (MA), of a front cover strip (2) and of the flank cover strips (3) connected in an articulated way to it at both sides by the hinge connections (23), and being each tilted away or projecting away from the front cover strip (2) transversely to the extension thereof substantially only with or shortly before the installation of the cable cover (10).

3. Device according to claim 1 or 2, **characterised in that** the cover strips (2, 3), which, as a whole, form the cover profile band (1), are produced from a plastic or polymer material which is flexible for reeling in longitudinal direction and substantially resiliently elasto-flexible transversely to the direction of extension.

4. Device according to any of claims 1 to 3, **characterised in that** the plastic or polymer material of the cover profile band (1) has the following material characteristics:
| | | |
|---|---|---|
| Stability of shape according to Martens | (DIN 53462) | 65-70°C and/or |
| Stability of shape according to Vicat | (DIN 53460) | 75-88°C 0.16 W/km and/or |
| (Process B) | | |
| Tensile strength | (DIN 53455) | 45-55 N/mm² and/or |
| Breaking elongation | (DIN 53455) | 10-20%, preferred 14-16% and/or |
| Bending stress limit | (DIN 53452) | 80-120 N/mm², preferred |
| | | 90-110 N/mm² and/or |
| Modulus of elasticity | (DIN 53457) | 2500-3500 N/mm², preferred |
| | | 2800-3200 N/mm², particul. |
| | | 2950-3050 N/mm² |

5. Device according to any of claims 1 to 4, **characterised in that** the cover strips (2, 3), which as a whole form the cover profile band (1), are produced from a hard polyvinylchloride (PVC) plastic material.

6. Device according to any of claims 1 to 5, **characterised in that** each one of the hinge connections (23) between the front cover strip (2) and the flank cover strips (3) of the cover profile band (1) is formed with an undercut open hinge duct (25) and a hinge head (35) pivoted in a rotation sliding manner therein.

7. Device according to any of claims 1 to 6, **characterised in that** the hinge ducts (25) are formed on the front cover strip (2), while the hinge heads (35) are formed on the flank cover strips (3).

8. Device according to any of claims 1 to 7, **characterised in that** the slot-like undercut opening (251) of the hinge duct (25) of the front cover strip (2) of the cover profile band (1) is directed towards the cable clamps (5) and to the cables (6) held by them.

9. Device according to any of claims 1 to 8, **characterised in that** the hinge duct (25) of the front cover strip (2) has a cross-sectional shape that substantially corresponds to the capital letter "C".

10. Device according to any of claims 1 to 9, **characterised in that** the hinge heads (35) of the two flank cover strips (3) of the cable cover profile band (1) are each formed as a kind of hinge rollers whose surfaces are rotatably slidable at the inner side of the hinge ducts (25) of the front cover strip (2).

11. Device according to any of claims 1 to 10, **characterised in that** the hinge heads (35) of the two flank cover strips (3) of the cable cover profile band (1), being rotatably slidable in the hinge duct (25), have each a cross-section of the kind of a nailhead, whose upper side comprises a convex curvature which corresponds to the concave curvature of the inner surfaces of the hinge ducts (25).

12. Device according to any of claims 1 to 11, **characterised in that** the concave curvature of the hinge ducts (25) of the front cover strip (2) and the convex curvature of the hinge heads (25) of the two flank cover strips (3) of the cable cover profile band (1) are each circular arch curvatures which are substantially adapted to one another and in one another for rotation and sliding.

13. Device according to any of claims 1 to 12, **characterised in that** a neck or shaft (351) is curved to the exterior and extends away from the hinge head (35), whose cross-sectional shape is formed in the manner of a nailhead, of each of the flank cover strips (3), and penetrates the slot opening (251) of the hinge duct (25) of the front cover strip (2), while changing into the respective flank cover strip (3) in an angled fashion.

14. Device according to any of claims 1 to 13, **characterised in that** the concave side (3511) of the curvature of the shaft (351) of the nail-like hinge head (35) of the flank cover strip (3) is formed in correspondence with the convex curvature (2511) of the outer side of that region of said duct (25) which immediately joins to the outside border of the slot opening (251) of the articulation duct (25) of the front cover strip (2).

15. Device according to any of claims 1 to 14, **characterised in that** the slot opening (251) of the articulation duct (25) of the front cover strip (2) and the nail-like hinge head (35) of the respective flank cover strip (3) is formed to cooperate for a limitation of pivoting or swinging open the respective flank cover strip (3) up to a respectively predetermined maximum pivoting angle (α), preferably in the range of 90°.

16. Device according to any of claims 1 to 15, **characterised in that**, with pivoting the respective flank cover strip (3) from the front cover strip (2) while exceeding the maximum pivoting angle (α), the flank cover strip (3) is able to be substantially elastically bent up and is, optionally, able to snap or latch into an undercut or the like provided e.g. on the cable clamps (5) to engage it, or it is able to be hung into or supported by that downwards bending of the cables (6), which is turned towards the wall.

17. Device according to any of claims 1 to 16, **characterised in that** each one of the two flank cover strips (3) of the cable cover profile band (1) comprises at its inner side a reinforcing rib (31) or the like, that extends in the direction of extension thereof.

18. Device according to claim 17, **characterised in that** the reinforcing rib (31) is formed for snapping or latching into a snap depression, a snap undercut or the like of the cable clamps (5), or merely to be hung or supported on that side of the cables (6) which is turned towards the wall.

19. Device according to any of claims 1 to 18, **characterised in that** the front cover strip (2) of the cover profile band (1) comprises a flat groove (22), preferably at the centre.

20. Device according to claim 19, **characterised in that** the flat groove (22) is provided for receiving and positioning a joint covering and holding platelet (4), preferably of sheet metal, which bridges the joint (111) of the ends (11) of two adjacent cover profile bands (1), and which may be fixed by fastening elements, particularly self-cutting screws (511), to be anchored on or in the cable clamp (5), preferably at both sides of said joint (111).

21. Device according to any of claims 1 to 20, **characterised in that** the front cover strip (2), for attaching it to the cable clamps (5), is formed at its (back) side, turned towards them, with a substantially elastic snapping or latching profile (28) which preferably extends at the longitudinal centre, and which may be snapped or latched into a corresponding counter-snapping or latching profile (58) formed on the cable clamp (5), and preferably also extending at the longitudinal centre on it.

22. Device according to any of claims 1 to 21, **characterised in that** the cable clamp (5) is provided with two trough-like cable holding shells (56), which have together a double-C cross-section symmetrical to one another, and have shell openings (565) which are each directed to the exterior.

23. Device according to any of claims 1 to 22, **characterised in that** an incision (57), open to the exterior, is situated between the two cable shells (56), and that that portion of them which extends from the incision (57) up to the free border (561) of the cable holding shell (56), to a limited degree, is resilient or able to spring off.

24. Device according to any of claims 1 to 23, **characterised in that** in the incision (57) between the two cable shells (56) counter snapping or latching noses (581) are arranged as a counter-snapping or latching profile (58), which are preferably facing each other, for snapping or latching cooperation with corresponding snapping or latching noses (281) of the cable cover profile band (1) or of the front cover strip (2) thereof.

25. Device according to any of claims 1 to 24, **characterised in that** on the bottom (571) of the incision (57) between the two cable shells, a mounting opening (51) for fastening the cable clamp (5) to a wall, a ceiling or the like, particularly of a (sewer) channel, preferably by means of a screw, is arranged, which penetrates the base bracket (50) of the cable clamp (5), preferably at the longitudinal centre.

26. Device according to any of claims 1 to 25, **characterised in that** in the base bracket (50) of the cable clamp (5), at both sides of the mounting opening (51), substantially also starting from the bottom of the incision (57) between the two cable holding shells (56), a respective slot opening (52) is arranged penetrating the base bracket (50) for anchoring, preferably material cutting, screws for fixing the butt joint ends (11) of two cable cover band (1) by means of joint covering and mounting platelets (4).

27. Device according to any of claims 1 to 26, **characterised in that** the cable clamp (5) comprises at least one eyelet (53), a pin, a hook or the like at at least one side, but preferably one respective at both sides, preferably situated at the centre, for fixing a cable binder for the cables (6) or cable strands located in the cable holding shells (56), preferably for cables of a smaller diameter than that of the holding shells (56).

28. Device according to any of claims 1 to 27, **characterised in that** the base bracket (50) of the cable clamp (5) comprises an indicator, particularly an indentation, a colour or a luminescent colour marking, a pointer (54) protruding away from the base bracket (50) or the like, which indicates the, preferably centred, position of the mounting opening (51).

29. Device according to any of claims 1 to 28, **characterised in that** the cable clamp (5) is produced from plastic material, preferably reinforced by (glass) fibres, , particularly from an ABS plastic material.

30. Method for realising the cover (10) of an installation and cover device for cables (6) or cable strands for telephony, data streams, current transport and the like, particularly glass fibre or photoconductor cables or cable strands, to be laid along walls, partitions, ceilings or the like, particularly of tubes, vaults, tunnels, channels, shafts or the like, which extend in the underground, preferably of (sewer) channel systems, comprising cable clamps (5) mounted in spaced relationship onto said walls or partitions, ceilings or the like, and a cover (10) to be fastened to them, which substantially embraces the cables (6) or cable strands, according to any of claims 1 to 29, particularly according to any of claims 2 to 29, **characterised in**
- **that**, particularly in condition (LT) for storing and transport, the three cover strips each being reeled on separate reeling members, such as drums, bobbins, rolls,

## Revendications

1. Dispositif de montage et de recouvrement de câbles (6) ou de faisceaux de câbles pour la téléphonie, des trains de données, pour le transport de courant et pareil, particulièrement des faisceaux ou câbles de verre filé ou des faisceaux ou câbles fibre optique, qui sont à poser le long des parois, des murailles, des plafonds ou pareil, en particulier des tuyaux s'étendant sous la terre, des caves, des tunnels, des canaux, des puits ou pareil, de préférence des systèmes de canaux (d'eaux de trop-plein), comprenant des portes-câble (5) montés à distance l'un de l'autre auxdites parois ou murailles, plafonds ou pareil, et un recouvrement (10) à fixer sur ou aux ceux-ci, qui sensiblement enveloppe les câbles (6) ou les faisceaux de câbles,
**caractérisé en ce,**
- **que** le recouvrement (10) est formé comme une bande en profil de revêtement de câble (1) capable à être enroulée à au moins un organe d'enroulement, particulièrement un tambour, une bobine, un rouleau, un cylindre ou pareil, et à être déroulée ou débobinée de ceci pour le montage, comprenant un ruban de revêtement frontal (2) et des rubans de revêtement de flanc (3) sortants de ses deux bords latéraux (201),
- **que** les deux rubans de revêtement latéraux (3) sont reliés au ruban de revêtement frontal (2) par une connexion flexible ou à pliage (23) ou bien par une connexion articulée, de préférence par une connexion à charnière (23),
- **que** les deux rubans de revêtement latéraux (3) de la bande en profil de revêtement de câble (1), dans sa condition (LT) enroulée, particulièrement pour le stockage et le transport, avec ses bords libres (301) sont repliés l'un vers l'autre et s'étendent dans la même direction comme le ruban de revêtement frontal (2) ou sensiblement parallèlement à ceci, et
- **que**, pour le fixage de la bande en profil (1), qui forme le recouvrement de câble (10), aux portes-câble (5) ainsi que pour le revêtement enveloppant des câbles (6) ou faisceaux de câbles supportés par ceux-ci, chacun des deux rubans de revêtement de flanc (3) peut être amené en position de montage et de revêtement (MA) en partant du ruban de revêtement frontal (2) en travers ou sensiblement perpendiculairement à l'extension de ceci par un pliage ou un pivotement en dehors.

2. Dispositif selon la revendication 1, **caractérisé en ce,**
- **que** le recouvrement de câble (10) ou la bande en profil (1), qui le forme, est pourvu des connexions articulées, particulièrement des connexions à charnières (23), entre le ruban de revêtement frontal (2) et les deux rubans de revêtement de flanc (3), chacun desdits rubans de revêtement (2, 3) étant enroulé ou bobiné pour le stockage et le transport à un organe d'enroulement séparé, et
- **que** les trois rubans de revêtement (2, 3, 3) peuvent être assemblés ou unis sensiblement seulement lors ou tout juste avant le montage du revêtement à l'ensemble de la bande en profil de revêtement (1), qui se trouve en position de montage et de revêtement MA, qui consiste du ruban de revêtement frontal (2) et, aux deux côtés, des rubans de revêtement de flanc (3) reliés d'une façon articulée à ceci par les connexions à charnières (23), qui sont pliés ou font saillie en dehors transversalement à l'extension du ruban de revêtement frontal (2) de ceci.

3. Dispositif selon la revendication 1 ou 2, **caractérisé en ce, que** les rubans de revêtement (2, 3), qui forment en commun la bande en profil de revêtement (1), sont fabriqués d'une matière plastique ou polymère, qui en direction longitudinale est flexible pour l'enroulement, et transversalement à la direction de l'extension est élastiquement elasto-flexible.

4. Dispositif selon une quelconque des revendications 1 à 3, **caractérisé en ce, que** la matière plastique ou polymère de la bande en profil de revêtement (1) comprend les données caractéristiques de matériau suivantes:
| | | |
|---|---|---|
| Stabilité dimensionnelle selon Martens | (DIN 53462) | 65-70°C et/ou |
| Stabilité dimensionnelle selon Vicat | | |
| (méthode B) | (DIN 53460) | 75-88°C 0,16 W/km et/ou |
| Résistance à la traction | (DIN 53455) | 45-55 N/mm² et/ou |
| Allongement à la rupture | (DIN 53455) | 10-20%, préféré 14-16% et/ou |
| Contrainte limite de flexion | (DIN 53452) | 80-120 N/mm², préférée |
| | | 90-110 N/mm² et/ou |
| Module d'élasticité | (DIN 53457) | 2500-3500 N/mm², préféré |
| | | 2800-3200 N/mm², en partic. |
| | | 2950-3050 N/mm² |

5. Dispositif selon une quelconque des revendications 1 à 4, **caractérisé en ce, que** les rubans de revêtement (2, 3), qui forment en commun la bande en profil de revêtement (1), sont fabriqués d'une matière plastique de chlorure de polyvinyle (PVC) dur.

6. Dispositif selon une quelconque des revendications 1 à 5, **caractérisé en ce, que** chacune des connexions à charnière (23) entre le ruban de revêtement frontal (2) et les rubans de revêtement de flanc (3) de la bande en profil de revêtement (1) est formée avec une rigole de charnière (25) ouverte d'une façon contre-dépouillée et avec une tête de charnière (35) pivotante d'une manière rotative et glissante dans celle-ci.

7. Dispositif selon une quelconque des revendications 1 à 6, **caractérisé en ce, que** les rigoles de charnière (25) sont formées au ruban de revêtement frontal (2), et les têtes de charnière (35) sont formées aux rubans de revêtement de flanc (3).

8. Dispositif selon une quelconque des revendications 1 à 7, **caractérisé en ce, que** l'ouverture (251) contre-dépouillée en forme de fente de la rigole de charnière (25) du ruban de revêtement frontal (2) de la bande en profil de revêtement (1) est dirigée vers les portes-câble (5) et vers les câbles (6) supportés par ceux-ci.

9. Dispositif selon une quelconque des revendications 1 à 8, **caractérisé en ce, que** la rigole de charnière (25) du ruban de revêtement frontal (2) a une façon en coupe sensiblement correspondante à la majuscule d'un «C».

10. Dispositif selon une quelconque des revendications 1 à 9, **caractérisé en ce, que** les têtes de charnière (35) des deux rubans de revêtement de flanc (3) de la bande en profil de revêtement de câble (1) sont chacun formées à la manière des cylindres de charnière rotatives et glissantes avec sa surface au côté intérieur des rigoles de charnière (25) du ruban de revêtement frontal (2).

11. Dispositif selon une quelconque des revendications 1 à 10, **caractérisé en ce, que** chacune des têtes de charnière (35), rotatives et glissantes dans la rigole de charnière (25), des deux rubans de revêtement de flanc (3) de la bande en profil de revêtement de câble (1) ont une façon en coupe similaire à un tête d'un clou, dont le côté supérieur a une courbure convexe en correspondance avec la courbure concave des surfaces intérieures des rigoles de charnière (25).

12. Dispositif selon une quelconque des revendications 1 à 11, **caractérisé en ce, que** la courbure concave des rigoles de charnière (25) du ruban de revêtement frontal (2) et les courbures convexes des têtes de charnière (35) des deux rubans de revêtement de flanc (3) de la bande en profil de revêtement de câble (1) sont chacune des courbures en arc circulaire, qui s'adaptent sensiblement l'une à l'autre ou l'une dans l'autre d'une forme rotative et glissante.

13. Dispositif selon une quelconque des revendications 1 à 12, **caractérisé en ce, qu**'un cou ou une tige (351) s'étend à partir de la tête de charnière (35) de chacun des rubans de revêtement de flanc (3), dont la façon en coupe et formée similaire à un tête d'un clou, et pénètre l'ouverture à fente (251) des rigoles de charnière (25) du ruban de revêtement frontal (2) en étant courbé vers l'extérieur, qui puis se converti d'une forme pliée en le ruban respectif de revêtement de flanc (3).

14. Dispositif selon une quelconque des revendications 1 à 13, **caractérisé en ce, que** le côté concave (3511) de la courbure de la tige (351) de la tête de charnière (35), formée similaire à un tête d'un clou, du ruban de revêtement de flanc (3) est formé en correspondance à la courbure convexe (2511) du côté extérieur de cette zone de la rigole (25), qui se joint immédiatement au bord extérieur de l'ouverture à fente (251) de ladite rigole d'articulation (25) du ruban de revêtement frontal (2).

15. Dispositif selon une quelconque des revendications 1 à 14, **caractérisé en ce, que** l'ouverture à fente (251) de la rigole d'articulation (25) du ruban de revêtement frontal (2) et la tête de charnière (35), similaire à un tête d'un clou, du ruban respectif de revêtement de flanc (3) sont formées à coopérer pour une limitation du pivotement ou du pliage en dehors du ruban respectif de revêtement de flanc (3) jusqu'à l'angle de pivotement maximal (α) respectivement prédéterminé, de préférence dans la domaine d'environ 90°.

16. Dispositif selon une quelconque des revendications 1 à 15, **caractérisé en ce, qu**'en cas d'un pivotement en dehors du ruban respectif de revêtement de flanc (3), qui dépasse l'angle de pivotement maximal (α) à patir du ruban de revêtement frontal (2), le ruban de revêtement de flanc (3) peut être pliée d'une façon élastique à ressort et, le cas échéant, peut enclenché ou verrouillé en s'accrochant, par exemple, dans une contre-dépouille ou pareil, présente aux portes-câble (5), ou qui peut suspendu ou appuyé à une courbure en bas des câbles (6) tournée vers la paroi.

17. Dispositif selon une quelconque des revendications 1 à 16, **caractérisé en ce, que** chacun des deux rubans de revêtement de flanc (3) de la bande en profil de revêtement de câble (1) comprend une nervure de renforcement (31) ou pareil à son côté intérieur, qui s'étend dans la direction de son extension.

18. Dispositif selon la revendication 17, **caractérisé en ce, que** la nervure de renforcement (31) est formée pour l'enclenchement ou le verrouillage dans une dépression d'enclenchement, une contre-dépouille ou pareil des portes-câbles (5), ou bien peut seulement suspendu ou appuyé au côté des câbles (6) tournée vers la paroi.

19. Dispositif selon une quelconque des revendications 1 à 18, **caractérisé en ce, que** le ruban de revêtement frontal (2) de la bande en profil de revêtement (1) comprend une rainure (22) peu profonde, préférablement au milieu.

20. Dispositif selon la revendication 19, **caractérisé en ce, que** la rainure peu profonde (22) est prévue pour recevoir et positionner d'une lamette de revêtement de joint et d'arrêt (4), de préférence d'une tôle, qui superpose le joint (111) des bouts (11) des deux bandes adjacentes en profil de revêtement (1), et peut être ancrée au moyens des éléments de fixation, particulièrement des vis autotaraudeuses (511) à fixer au ou dans le porte-câble (5), préférablement aux deux côtés dudit joint (111).

21. Dispositif selon une quelconque des revendications 1 à 20, **caractérisé en ce, que** le ruban de revêtement frontal (2), pour sa fixation aux portes-câble (5), est formé à son côté (postérieur) tourné vers ceux-ci avec un profil d'enclenchement ou de verrouillage (28) sensiblement élastique à ressort et préférablement s'étendant au milieu longitudinal, qui peut être enclenché ou verrouillé dans un contre-profil d'enclenchement ou de verrouillage (58) correspondant et formé au porte-câble (5), qui de préférence s'étend aussi au milieu longitudinal sur ceci.

22. Dispositif selon une quelconque des revendications 1 à 21, **caractérisé en ce, que** le porte-câble (5) est prévu de deux cuvettes de support de câble (56) similaires à une rigole et ayant en commun le profil en travers symétrique d'un double C, dont les ouvertures de cuvette (565) sont chacune dirigées vers l'extérieur.

23. Dispositif selon une quelconque des revendications 1 à 22, **caractérisé en ce, qu**'entre les deux cuvettes de support de câble (56), une incision (57) est disposée et ouverte vers l'extérieur, et que cette section, qui s'étend de l'incision (57) jusqu'au bord libre (561) de la cuvette de support de câble (56), est construit d'une façon élastique ou élargissant à un dégrée limité.

24. Dispositif selon une quelconque des revendications 1 à 23, **caractérisé en ce, que** des contre-nez à crochet ou d'enclenchement (581), de préférence tourné l'une vers l'autre, pour la coopération lors de l'accrochage ou de la verrouillage avec des nez à crochet ou d'enclenchement (281) correspondantes de la bande en profil de revêtement de câble (1) ou de son ruban de revêtement frontal (2) sont disposés dans l'incision (57) entre les deux cuvettes de support de câble (56) comme un contre-profil à crochet ou d'enclenchement.

25. Dispositif selon une quelconque des revendications 1 à 24, **caractérisé en ce, qu**'une ouverture de montage (51), qui pénètre la console de base (50) du porte-câble (5), préférablement au milieu de son extension longitudinal, pour la fixation du porte-câble (5) à une paroi, un plafond ou pareil, particulièrement d'un canal (d'eaux de trop-plein), de préférence au moyens d'une vis (511), est disposé au fond de l'incision (57) entre les deux cuvettes de support de câble.

26. Dispositif selon une quelconque des revendications 1 à 25, **caractérisé en ce, qu**'une ouverture à fente (52) pour l'ancrage des vis, de préférence autotaraudeuses, pour la fixation des bouts (11) joignants bord à bord des deux bandes de revêtement de câble (1) au moyens d'une lamette de revêtement de joint et de montage (4), est disposée dans la console de base (50) du porte-câble (5) aux deux côtés de l'ouverture de montage (51) en partant sensiblement aussi du fond de l'incision (57) entre les deux cuvettes de support de câble (56).

27. Dispositif selon une quelconque des revendications 1 à 26, **caractérisé en ce, que** le porte-câble (5) à au moins un côté, mais de préférence aux deux côtés, comprend au moins un oeillet (53), une cheville, un crochet ou pareil pour fixer une ligature de câble pour les câbles (6) ou faisceaux de câble disposés dans les cuvettes de support de câble (56), préférablement pour des câbles d'un diamètre plus petit que celui-ci des cuvettes de support (56), qui est de préférence disposé au milieu.

28. Dispositif selon une quelconque des revendications 1 à 27, **caractérisé en ce, que** la console de base (50) du porte-câble (5) comprend un indicateur, comme particulièrement une encoche, une marque en couleur ou en couleur luminescent, un index (54) faisant saillie de la console de base (50) ou pareil, qui indique la position, de préférence au milieu, de l'ouverture de montage (51).

29. Dispositif selon une quelconque des revendications 1 à 28, **caractérisé en ce, que** les portes-câble (5) sont produits d'une matière plastique, préférablement renforcée par fibres (de verre), particulièrement d'une matière plastique ABS.

30. Procédé pour la formation d'un recouvrement (10) d'un dispositif de montage et de recouvrement de câbles (6) ou de faisceaux de câbles pour la téléphonie, des trains de données, pour le transport de courant et pareil, particulièrement des faisceaux ou câbles de verre filé ou des faisceaux ou câbles fibre optique, qui sont à poser le long des parois, des murailles, des plafonds ou pareil, en particulier des tuyaux s'étendant sous la terre, des caves, des tunnels, des canaux, des puits ou pareil, de préférence des systèmes de canaux (d'eaux de trop-plein), comprenant des portes-câble (5) montés à distance l'un de l'autre auxdites parois ou murailles, plafonds ou pareil, et un recouvrement (10) à fixer sur ou aux ceux-ci, qui sensiblement enveloppe les câbles (6) ou les faisceaux de câbles, selon une quelconque des revendications 1 à 29, particulièrement selon une quelconque des revendications 2 à 29, **caractérisé en ce,**
- **que** les trois rubans de revêtement enroulés, particulièrement en condition (LT) pour le stockage et le transport, chacun sur des organes d'enroulement séparés, comme des tambours, des bobines, des rouleaux, des cylindres ou pareil, à savoir le ruban de revêtement frontal (2) et les deux rubans de revêtement de flanc (3), après avoir être amenés à la zone de la place de montage ou de pose, sont déroulés en synchronisme de ses longueurs des ses organes d'enroulement, et
- **que** l'on assemble ou réunit les rubans de revêtement de flanc (3), de préférence simultanément, sensiblement à la manière de la fermeture d'une pseudo-fermeture à glissière sans dent, assistée par une pression, par une introduction de ses têtes de charnière (35) à travers des ouvertures à fente (251), qui s'élargissent élastiquement sous l'effet de la pression, des deux rigoles de charnière (25) du ruban de revêtement frontal (2) à former la bande en profil de revêtement (1), de préférence dans sa condition (MA) prêt à la fixation comme recouvrement (10) aux portes-câble (5), les rubans de revêtement de flanc (3) étant pivotés en dehors du ruban de revêtement frontal (2).
